# EUROPEAN PATENT APPLICATION

(11) **EP 3 422 180 A1**
(43) Date of publication of application: **02.01.2019**
(21) Application number: 17178349.1
(22) Date of filing: 28.06.2017
(51) Int. Cl.: G06F 9/44, G06F 1/26

(54) **CONSUMER ELECTRONICS DEVICE AND METHOD**

(71) Applicant: Vestel Elektronik Sanayi ve Ticaret A.S., 45030 Manisa (TR)
(72) Inventor: ÜNAL, Olgun, 45030 Manisa (TR)
(74) Representative: Ascherl, Andreas

(57) **Abstract**

The present invention provides consumer electronics device (100, 200) comprising a volatile memory (101, 201) configured to store an operating software (102) of the consumer electronics device (100, 200), a processor (103, 203) coupled to the volatile memory (101, 201) and configured to execute the operating software (102) stored in the volatile memory (101, 201), an energy storage (104, 204) configured to store electrical energy, and a power supply system (105) configured to supply at least the volatile memory (101, 201) with electrical energy from a mains power (151, 251) or when the mains power (151, 251) is not available from the energy storage (104, 204).

## Description

### TECHNICAL FIELD

The invention relates to a consumer electronics device and a method for supplying a consumer electronics device with electrical energy.

### BACKGROUND

Although applicable to any electronic system, the present invention will mainly be described in conjunction with consumer electronics devices.

In modern consumer electronics devices, like e.g. smart TVs, set-top boxes, smartphones or the like usually an operating software executed by a processor provides part of the functionality of the respective consumer electronics device. Such operating software must be provided to a processor of the respective consumer electronics device on startup of the consumer electronics device.

Usually, a consumer electronics device will comprise some kind of non-volatile memory like e.g. a flash memory that stores or holds the operating software and provides the operating software to the processor during and after startup of the consumer electronics device.

However, such consumer electronics devices require a complex hardware arrangements with a plurality of different electronic elements.

Accordingly, there is a need for simplified consumer electronics devices.

### SUMMARY OF THE INVENTION

The present invention provides a consumer electronics device with the features of claim 1 and a method with the features of claim 8.

Accordingly, it is provided:
A consumer electronics device comprising a volatile memory configured to store an operating software of the consumer electronics device, a processor coupled to the volatile memory and configured to execute the operating software stored in the volatile memory, an energy storage configured to store electrical energy, and a power supply system configured to supply at least the volatile memory with electrical energy from a mains power or when the mains power is not available from the energy storage.

Further, it is provided:
A method for operating a consumer electronics device with a volatile memory, the method comprising storing an operating software for the consumer electronics device in the volatile memory, supplying at least the volatile memory with electrical energy from a mains power if the mains power is available, and supplying at least the volatile memory with electrical energy from an energy storage of the consumer electronics device, when the mains power is not available.

As already explained above, modern consumer electronics devices usually require an operating software. The software provides the flexibility to implement functions of the consumer electronics device flexibly in software instead of hardware. This also allows easily modifying or adding functions to the consumer electronics device.

The present invention is based on the finding that a non-volatile memory is only needed in consumer electronics devices because the volatile memory will lose its contents when it is completely powered off. However, the non-volatile memory adds to the complexity of the consumer electronics device.

Consequently, the present invention provides an arrangement that only comprises a volatile memory that stores the operating software and provides the operating software to a processor of the consumer electronics device. The volatile memory may e.g. be a RAM memory or any other volatile memory type.

To bridge phases in which no mains power is available, the present invention also provides the power supply system. The power supply system may be seen as a redundant power supply that supplies the volatile memory with electrical energy from a mains power, e.g. a standard 230 V or 110 V power outlet, when such power is available. In addition, the power supply system will supply the volatile memory with electrical power from the energy storage when the mains power is not available. It is understood, that although not mentioned the power supply system may comprise any type of rectifiers and voltage transformers or converters that are required to convert the mains power into electrical power as required by the volatile memory and e.g. the processor. The same applies to electrical power supplied by the energy storage.

The power supply system therefore provides uninterrupted electrical power to the volatile memory. If the electrical supply of the volatile memory is not interrupted and continuously provided, the volatile memory will keep its contents, even if the consumer electronics device is turned off and disconnected from the mains supply. It is understood that the power supply system may also provide electrical energy to other elements of the consumer electronics device during normal (mains powered) operation, like e.g. the processor and the like.

Volatile memory usually only requires very little electrical power to keep or retain its content. Therefore, long phases of interrupted mains power may be bridged by the power supply system with a relatively small energy storage. It is understood, that the energy storage may be any kind of electrical energy storage, like e.g. a battery, a capacitor, like e.g. a super- or gold capacitor, or the like.

Summing up, the present invention allows creating consumer electronics devices without a non-volatile memory, i.e. with a simplified system design. At the same time the present invention makes sure, that the operating software is retained in the volatile memory of the consumer electronics device.

Further embodiments of the present invention are subject of the further subclaims and of the following description, referring to the drawings.

In an embodiment, the consumer electronics device may comprise an external data interface, wherein the processor may comprise a boot loader, and wherein the boot loader may be configured to load the operating software from the volatile memory if the operating software is available in the volatile memory and to load the operating software via the external data interface if the operating software is not available in the volatile memory.

There may be phases without mains power available that last very long. Such phases may e.g. be present after production of a consumer electronics device, when the respective device is packaged and shipped to a user (including possible storage in storehouses).

During such phases the energy storage may be depleted. This means that the energy storage may not be able to provide electrical energy that may serve to supply the volatile memory with electrical energy. The volatile memory may therefore not be able to retain its contents and the operating software will be lost.

In such cases the consumer electronics device needs a fallback solution that allows the consumer electronics device to acquire the operating software if it is not available in the volatile memory any more.

The external data interface in combination with the boot loader provides such a possibility. The boot loader may e.g. be provided in the processor. Usually processors will comprise a small amount of non-volatile memory that may not serve to store the complete operating software. However, such memory may be large enough to store the boot loader.

The boot loader may be a piece of software that provides functions that allow the processor to acquire the operating software via the external data interface. The boot loader may further copy the operating software to the volatile memory and store it there for further use by the processor. Once the operating software is present in the volatile memory, the boot loader may terminate and the processor may start executing the operating software from the volatile memory.

As will be explained below, the external data interface may allow the boot loader to acquire the operating software via a network or other data carriers.

In an embodiment, the external data interface may comprise a network interface and/or the external data interface may comprise an interface for inserting a removable memory device.

With a network interface, like e.g. a LAN or WIFI interface or the like, the consumer electronics device may very flexibly acquire the operating software if the phase without mains power was so long that the energy storage was depleted and the volatile memory finally lost its contents. An interface for inserting a removable memory device, like e.g. a USB stick or a memory card, on the other hand allows providing the operating software e.g. after a first start of the consumer electronics device, e.g. after installation of the consumer electronics device.

Consumer electronics devices may e.g. be TV sets that are provided in a plurality of hotel rooms of a hotel. This means that a plurality of identical TV sets have to be setup for operation. In a hotel the TV sets will further permanently be installed in the rooms. This means that usually a mains power will be permanently available e.g. for charging the energy storage.

In such environments, the TV sets may e.g. be provided with the operating software via a USB stick or the like, during installation of the TV set. Further, usually hotels will comprise a network to which the TV sets are connected, e.g. for determining a fee for pay TV use by a user. Therefore, such a network may also provide the operating software.

Hotels with such a network may e.g. provide a local server that provides the operating software if it is requested by a consumer electronics device. The consumer electronic devices may e.g. be configured to look up a specific host by its name via a DNS lookup. This allows e.g. a DNS server of the hotel to provide either the address of the local server or an address of a central server on the internet as response to such a DNS lookup.

In an embodiment, the boot loader may be configured to verify the integrity of the loaded operating software.

Even if the operating software is available in the volatile memory, the operating software may be corrupted. Especially the volatile memory may e.g. comprise corrupted memory cells after a phase of very low supply voltage. In such cases it may appear to the boot loader that the operating software is available in the volatile memory, e.g. because a header or the like of the operating software may be preserved correctly, while other parts of the operating software may be corrupted. However, such an operating software with corrupted parts would at some point cause malfunctions of the consumer electronics device. It is understood, that although network interfaces and memory devices like USB sticks usually comprise error correction mechanisms, operating software loaded via the external data interface may also be corrupted.

The boot loader may therefore verify the operating software prior to executing the operating software. The boot loader may e.g. verify a check sum or hash value of the operating software or perform any other type of verification.

In an embodiment, the volatile memory may comprise a memory power controller and the power supply system may comprise a charge controller and a power supply unit configured to supply the memory power controller and the charge controller with electrical energy from the mains power if the mains power is available. The charge controller may be configured to charge the energy storage with the electrical energy supplied by the power supply unit.

In this arrangement of the power supply system, the power supply unit will permanently provide electrical energy to the memory power controller for continuously operating the volatile memory. The memory power controller may e.g. be integrated with the volatile memory in a single integrated circuit or may be provided with the power supply unit or as a separate device. The memory power controller may e.g. perform voltage conversion and power regulation of the electrical energy supplied by the power supply unit, such that the volatile memory may be operated correctly. Operating correctly refers to the volatile memory receiving at least as much electrical energy as it requires to retain its content.

Since the power supply unit also provides the charge controller with electrical energy as long as the mains power is available, the charge controller may permanently charge the energy storage. This ensures that the energy storage is always charged to its maximum capacity. Whenever the mains power becomes unavailable the energy storage will therefore be fully charged. The period that may be bridged using the energy storage may therefore be maximized.

In an embodiment, the memory power controller may be coupled to the energy storage and may be configured to drain electrical energy from the energy storage for supplying electrical energy to the volatile memory in absence of an energy supply from the power supply unit.

The memory power controller may e.g. automatically detect the power level of the energy supplied by the power supply unit. Whenever the memory power controller detects that the power supply unit stops supplying electrical energy, the memory power controller may automatically switch to draining electrical energy from the energy storage. An uninterrupted power supply to the volatile memory may therefore be provided and the volatile memory will retain its contents.

In an embodiment, the consumer electronics device may comprise an energy harvesting device coupled to the charge controller and configured to harvest electrical energy from the consumer electronics device's surroundings and provide the electrical energy to the charge controller.

The energy harvesting device may e.g. comprise a solar cell, a Peltier element, an antenna (like in a RFID tag), a microelectromechanical (MEMS) device, or the like. In fact, any device that is capable of generating electrical energy may be used as energy harvesting device.

With the energy harvesting device the energy storage may be actively recharged even if no mains power is available.

For example in living rooms or hotel rooms a TV set will be exposed to direct or indirect incident sunlight regularly every day. A solar cell may therefore generate electrical energy during the day. This electrical energy may then be used by the charge controller to charge the energy storage. The memory power controller may then use this electrical energy during day and night to power the volatile memory such that it at least retains its contents. This is especially usefully if e.g. a user leaves for vacation and unplugs the TV set or in hotel rooms that completely turn off the mains power if no guest is inhabiting the respective room.

Especially in such installations where the consumer electronics device will regularly be capable of harvesting electrical energy, the present invention may also be used without the networking interface with a local interface only. For example, in a hotel with a plurality of rooms a technician who installs the consumer electronics device may then e.g. install the consumer electronics devices in their position and perform the first start with a USB stick plugged in. The USB stick may then carry the operating software that is loaded during this first start. After the first start the volatile memory will then always be supplied with electrical energy from either the mains power or via the energy harvesting device and the energy storage.

If the consumer electronics device comprises a network interface electrical energy may also be harvested via that network interface. It is understood that a network supply system, like e.g. Power over Ethernet, may be used. However, since only very little electrical energy is required for the volatile memory to retain its content, that energy may also be harvested via standard network lines.

Although mainly described above in conjunction with TV sets, it is understood that the present invention may be used with any kind of electronics device that requires an operating software. Such devices may e.g. comprise set-top boxes, smartphones or the like.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a consumer electronics device according to the present invention;
Fig. 2 shows a block diagram of another embodiment of a consumer electronics device according to the present invention;
Fig. 3 shows a flow diagram of an embodiment of a method according to the present invention;
Fig. 4 shows a flow diagram of another embodiment of a method according to the present invention; and
Fig. 5 shows a flow diagram of another embodiment of a method according to the present invention.

In the figures like reference signs denote like elements unless stated otherwise.

### DETAILED DESCRIPTION OF THE DRAWINGS

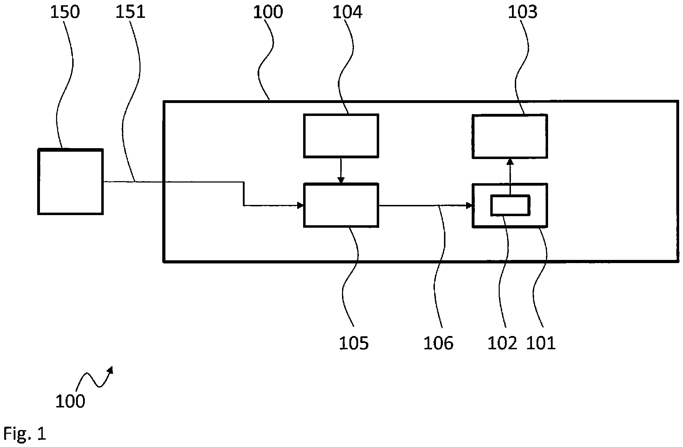

Fig. 1 shows a block diagram of a consumer electronics device 100. The consumer electronics device 100 comprises a processor 103 that is connected to a volatile memory 101 that holds an operating software 102 for the processor 103. The consumer electronics device 100 further comprises a power supply system 105 for the volatile memory 101. The power supply system 105 is coupled on the one hand to a mains outlet 150 that provides mains power 151 and on the other hand to an energy storage 104. Although not shown, it is understood that the power supply system 105 may also supply the processor 103 and other elements of the consumer electronics device 100 with electric energy or power. Such elements may e.g. be display devices, backlights or any other type of electronic element in the consumer electronics device 100.

The power supply system 105 may provide supply energy 106 to the volatile memory 101 from the mains outlet 150 as long as the mains power 151 is available. This operating mode may also be called a normal or standard operating mode and allows full operation of the consumer electronics device 100. In this normal operation mode the power supply system 105 may charge the energy storage 104 using part of the mains power 151.

However, if for example the consumer electronics device 100 is unplugged from the mains outlet 150 or a power outage occurs, the mains power 151 will not be available. In this case, the power supply system 105 may continue to supply the volatile memory 101 but with supply energy 106 from the energy storage 104. This operation mode may e.g. be called a standby or bridging operation mode, because it is only used to bridge the time without mains power 151 available.

In the bridging operation mode the functionality of the consumer electronics device 100 may be reduced. The only function still available may be a power supply function performed by the power supply system 105 that allows the volatile memory 101 to retain its content.

When the mains power 151 becomes available again, the consumer electronics device 100 may resume normal operation and the complete functionality may be available again.

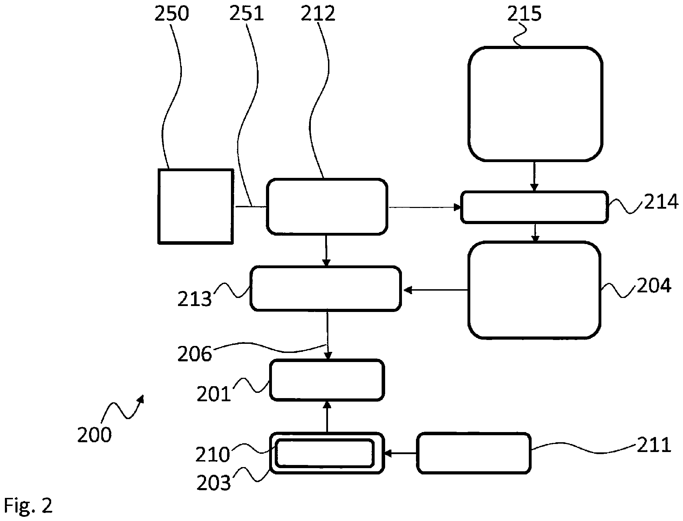

Fig. 2 shows a block diagram of another consumer electronics device 200. The consumer electronics device 200 also comprises a volatile memory 201 that is coupled to a processor 203. The processor 203 comprises a boot loader 210 and is coupled to an external data interface 211. The consumer electronics device 200 further comprises an energy storage 204 and a power supply system. However, the power supply system is not shown as a single device. Instead the power supply system comprises a power supply unit 212 that is coupled to the mains outlet 250 to receive the mains power 251. Further, a memory power controller 213 and a charge controller 214 is coupled to the power supply unit 212. The memory power controller 213 is further coupled to the volatile memory 201. The charge controller 214 is further coupled to an energy harvesting device 215 and an energy storage 204.

In the consumer electronics device 200 the processor 203 with the boot loader 210 is capable of using an operating software that may be stored or provided in the volatile memory 201. However, after a long phase without mains power 251, the volatile memory 201 may have lost its content. In this case the boot loader 210 will use the external data interface 211 to retrieve the operating software and store the operating software in the volatile memory 201. The external data interface 211 may e.g. be a network interface 211, like e.g. a LAN interface. As an alternative the external data interface 211 may e.g. be a memory card or USB interface. With the boot loader 210 the consumer electronics device 200 may therefore also be initialized or booted, even if the operating software is not available in the volatile memory 201.

The power supply unit 212 of the consumer electronics device 200 converts the mains power 251 into operating energy for the consumer electronics device 200 if the mains power 251 is available. Such energy may e.g. comprise electrical supply voltages of different voltage levels, e.g. 5 V, 3.3 V, 12 V and/or 24 V or the like. At the same time the charge controller 214 will use the provided energy to charge the energy storage 204, e.g. a battery 204 or a gold or super capacitor. The power supply unit 212 will also provide the memory power controller 213 with electrical energy to operate the volatile memory 201. In this normal operation state the memory power controller 213 will allow full operation of the volatile memory 201, e.g. reading and writing data from/to the volatile memory 201.

If the mains power 251 is not available, the power supply unit 212 may not provide any energy. In this case, the memory power controller 213 will drain electrical energy from the energy storage 204. In addition, the charge controller 214 will try to load the energy storage 204 based on the energy harvested by the energy harvesting device 215. If the energy harvesting device 215 is e.g. a solar cell, the charge controller 214 may charge the energy storage 204 whenever the energy harvesting device 215 receives incident light, e.g. during the daytime.

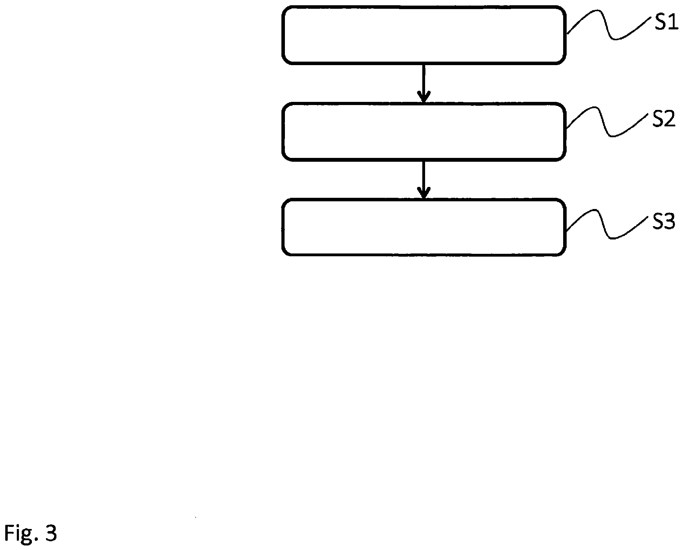

For ease of understanding, the reference signs used in the above description of the apparatus-based Figs. 1 and 2 will also be used in the description of the method-based Figs. 3 - 5.

Fig. 3 shows a flow diagram of a method for operating a consumer electronics device 100, 200 with a volatile memory 101, 201. The method comprises storing S1 an operating software 102 for the consumer electronics device 100, 200 in the volatile memory 101, 201, e.g. a RAM memory. Further, the method comprises supplying S2 at least the volatile memory 101, 201 with electrical energy from a mains power 151, 251 if the mains power 151, 251 is available. In this case the consumer electronics device 100, 200 may be fully functional. Finally, the method also comprises supplying S3 at least the volatile memory 101, 201 with electrical energy from an energy storage 104, 204 of the consumer electronics device 100, 200, when the mains power 151, 251 is not available, e.g. during a power outage.

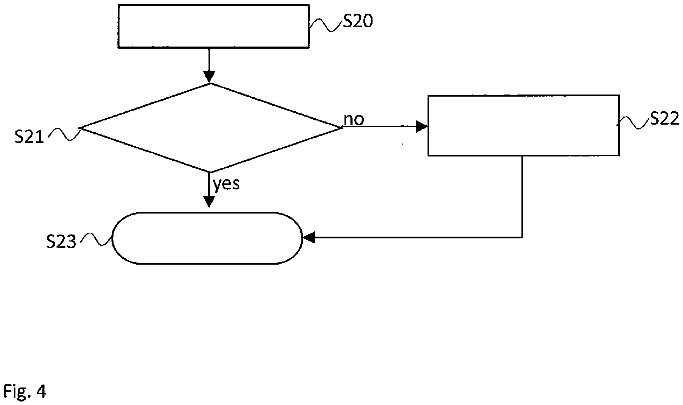

Fig. 4 shows the startup phase of the processor 103, 203 of the consumer electronics device 100, 200. In step S20 the boot loader 210 is executed. The boot loader 210 checks in step S21 if the operating software is available in the volatile memory 101, 201. If the operating software is available, the operating software is executed from the volatile memory 101, 201 in step S23. If the operating software is not available, the operating software will first be downloaded in step S22 into the volatile memory 101, 201 and will then be executed in step S23.

As indicated above, downloading S22 may include downloading the operating software via a network interface of the consumer electronics device 100, 200 or from a memory card or USB stick that is plugged into the consumer electronics device 100, 200.

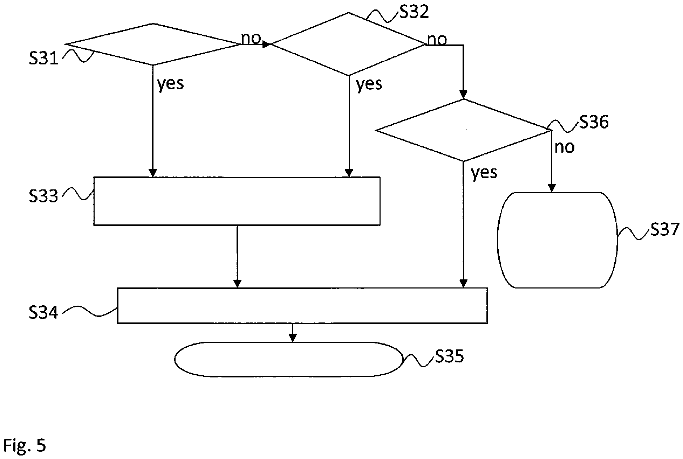

Fig. 5 shows a scheme that may be executed to determine how to supply the volatile memory 101, 201 with electrical energy. This scheme may e.g. be executed permanently during operation of the consumer electronics device 100, 200 to ensure that the volatile memory 101, 201 is always powered at least to retain its contents.

In step S31 it is verified if mains power 151, 251 is available. If the mains power 151, 251 is available, the energy storage 104, 204 is charged in step S33 and electrical energy is provided to the volatile memory 101, 201 in step S35. This may be done by providing the electrical energy to the memory power controller 213 in step S34.

If no mains power 151, 251 is available, it is verified if power from the energy harvesting device 215 is available. If this is the case, the energy storage 104, 204 is charged in step S33 and electrical energy is provided to the volatile memory 101, 201 in step S35. This may be done by providing the electrical energy to the memory power controller 213 in step S34. It is understood, that with the energy from the energy harvesting device 215 the functionality of the consumer electronics device 100, 200 may be limited, e.g. just for retention of the contents the volatile memory 101, 201.

Finally, if neither mains power 151, 251 nor energy from the energy harvesting device 215 is available, in step S36 it is verified if the energy storage 104, 204 comprises enough electrical energy. If so, the electrical energy is provided to the volatile memory 101, 201 in step S35. This may be done by providing the electrical energy to the memory power controller 213 in step S34

If enough energy is not available in the energy storage 104, 204 to power the volatile memory 101, 201 to at least retain its contents, step S37 comprises waiting for the mains power 151, 251 to return. If the mains power 151, 251 returns, the scheme according to Fig. 4 may be executed.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides consumer electronics device (100, 200) comprising a volatile memory (101, 201) configured to store an operating software (102) of the consumer electronics device (100, 200), a processor (103, 203) coupled to the volatile memory (101, 201) and configured to execute the operating software (102) stored in the volatile memory (101, 201), an energy storage (104, 204) configured to store electrical energy, and a power supply system (105) configured to supply at least the volatile memory (101, 201) with electrical energy from a mains power (151, 251) or when the mains power (151, 251) is not available from the energy storage (104, 204).

**List of reference signs**

| | |
|---|---|
| 100, 200 | consumer electronics device |
| 101, 201 | volatile memory |
| 102 | operating software |
| 103, 203 | processor |
| 104, 204 | energy storage |
| 105 | power supply system |
| 106, 206 | supply energy |
| | |
| 210 | boot loader |
| 211 | external data interface |
| 212 | power supply unit |
| 213 | memory power controller |
| 214 | charge controller |
| 215 | energy harvesting device |
| | |
| 150, 250 | mains outlet |
| 151, 251 | mains power |
| | |
| S1 - S3 | method steps |
| S20 - S23 | method steps |
| S31 - S37 | method steps |

## Claims

1. Consumer electronics device (100, 200) comprising:
a volatile memory (101, 201) configured to store an operating software (102) of the consumer electronics device (100, 200),
a processor (103, 203) coupled to the volatile memory (101, 201) and configured to execute the operating software (102) stored in the volatile memory (101, 201),
an energy storage (104, 204) configured to store electrical energy, and
a power supply system (105) configured to supply at least the volatile memory (101, 201) with electrical energy from a mains power (151, 251) or when the mains power (151, 251) is not available from the energy storage (104, 204).

2. Consumer electronics device (100, 200) according to claim 1, comprising an external data interface (211), wherein the processor (103, 203) comprises a boot loader (210), and wherein the boot loader (210) is configured to load the operating software (102) from the volatile memory (101, 201) if the operating software (102) is available in the volatile memory (101, 201) and to load the operating software (102) via the external data interface (211) if the operating software (102) is not available in the volatile memory (101, 201).

3. Consumer electronics device (100, 200) according to claim 2, wherein the external data interface (211) comprises a network interface (211) and/or wherein the external data interface (211) comprises an interface (211) for inserting a removable memory device.

4. Consumer electronics device (100, 200) according to any one of claims 2 and 3, wherein the boot loader (210) is configured to verify the integrity of the loaded operating software (102).

5. Consumer electronics device (100, 200) according to any one of the preceding claims, wherein the volatile memory (101, 201) comprises a memory power controller (213) and wherein the power supply system (105) comprises a charge controller (214) and a power supply unit (212) configured to supply the memory power controller (213) and the charge controller (214) with electrical energy from the mains power (151, 251) if the mains power (151, 251) is available, wherein the charge controller (214) is configured to charge the energy storage (104, 204) with the electrical energy supplied by the power supply unit (212).

6. Consumer electronics device (100, 200) according to claim 5, wherein the memory power controller (213) is coupled to the energy storage (104, 204) and is configured to drain electrical energy from the energy storage (104, 204) for supplying electrical energy to the volatile memory (101, 201) in absence of an energy supply from the power supply unit (212).

7. Consumer electronics device (100, 200) according to any one of claims 5 and 6, comprising an energy harvesting device (215) coupled to the charge controller (214) and configured to harvest electrical energy from the consumer electronics device's surroundings and provide the electrical energy to the charge controller (214).

8. Method for operating a consumer electronics device (100, 200) with a volatile memory (101, 201), the method comprising:
storing (S1) an operating software (102) for the consumer electronics device (100, 200) in the volatile memory (101, 201),
supplying (S2) at least the volatile memory (101, 201) with electrical energy from a mains power (151, 251) if the mains power (151, 251) is available, and
supplying (S3) at least the volatile memory (101, 201) with electrical energy from an energy storage (104, 204) of the consumer electronics device (100, 200), when the mains power (151, 251) is not available.

9. Method according to claim 8, comprising loading (S23) the operating software (102) from the volatile memory (101, 201) if the operating software (102) is available in the volatile memory (101, 201) and loading (S22) the operating software (102) via an external data interface (211) if the operating software (102) is not available in the volatile memory (101, 201).

10. Method according to claim 9, wherein the operating software (102) is loaded via a network interface (211) and/or an interface (211) for inserting a removable memory device.

11. Method according to any one of claims 9 and 10, verifying the integrity of the loaded operating software (102).

12. Method according to any one of the preceding claims, comprising supplying (S34) a memory power controller (213) for the volatile memory (101, 201) and a charge controller (214) for the energy storage (104, 204) with electrical energy from the mains power (151, 251) if the mains power (151, 251) is available, and charging (S33) the energy storage (104, 204) with the charge controller (214) with the electrical energy supplied by the power supply unit (212).

13. Method according to claim 12, comprising draining electrical energy from the energy storage (104, 204) with the memory power controller (213) for supplying electrical energy to the volatile memory (101, 201) in absence of the mains power (151,251).

14. Method according to any one of claims 12 and 13, comprising harvesting electrical energy from the consumer electronics device's surroundings and providing the electrical energy to the charge controller (214).
